# EUROPÄISCHE PATENTSCHRIFT

(11) **EP 3 786 591 B1**
(45) Veröffentlichungstag und Bekanntmachung des Hinweises auf die Patenterteilung: **02.11.2022**
(21) Anmeldenummer: 19194547.6
(22) Anmeldetag: 30.08.2019
(51) Int. Cl.: G01D 21/00, G01D 11/02, G01D 11/30, G01P 3/44

(54) **SENSOREINHEIT UND GETRIEBE MIT ZUMINDEST EINER SOLCHEN SENSOREINHEIT**
SENSOR UNIT AND TRANSMISSION COMPRISING AT LEAST ONE SUCH SENSOR UNIT
UNITÉ DE CAPTEUR ET BOÎTE DE VITESSES DOTÉE D'AU MOINS UNE TELLE UNITÉ DE CAPTEUR

(43) Veröffentlichungstag der Anmeldung: 03.03.2021
(73) Patentinhaber: Flender GmbH, 46395 Bocholt (DE)
(72) Erfinder: Camminadi, Julia, 46145 Oberhausen (DE); van Manen, Ricardo, 46395 Bocholt (DE)
(74) Vertreter: Michalski Hüttermann & Partner Patentanwälte mbB

(56) Entgegenhaltungen:
- EP-A1- 3 150 978
- EP-A2- 1 292 831
- CN-U- 204 881 845
- DE-T5-112014 000 688
- JP-A- 2003 065 835
- US-A1- 2003 030 565
- US-A1- 2018 224 306

## Beschreibung

Die vorliegende Erfindung betrifft eine Sensoreinheit umfassend Sensorbestandteile verschiedener Sensoreinrichtungen sowie zumindest eine Spannungsversorgungs- und Signalübertragungskomponenten für diese Sensorbestandteile aufweisende Platine, an welche die Sensorbestandteile angeschlossen sind. Ferner betrifft die vorliegende Erfindung ein Getriebe mit zumindest einer solchen Sensoreinheit. Darüber hinaus betrifft die Erfindung einen Antriebsstrang mit einem solchen Getriebe, eine Windkraftanlage mit einem solchen Antriebsstrang sowie eine Industrie-Applikation mit einem solchen Getriebe.

Es ist wünschenswert, mechanische Systeme, beispielsweise in Form von Getrieben, IoT-fähig zu gestalten (IoT: Internet of Things). Hierzu werden Sensoreinrichtungen verbaut, um Messgrößen wie Drehmomente, Drehzahlen, Schwingungen und Temperaturen aufzunehmen. Die Messgrößenaufnehmer der Sensoreinrichtungen werden im Falle eines Getriebes an verschiedenen Stellen am und im Getriebe montiert und dann mit einer oder mehreren Platinen verbunden, welche die erforderlichen Spannungsversorgungs- und Signalübertragungskomponenten für die entsprechenden Sensoren aufweisen. Die Platinen werden dann wiederum mit zumindest einer externen Spannungsversorgungs- und Signalauswerteeinrichtung verbunden. Diese Art der Verdrahtung zieht einen hohen Zeit- und Kostenaufwand nach sich.

Aus EP 1 292 831 B1 ist eine Sensoreinheit für ein Lager bekannt, bei der mehrere Sensoren zur Messung einer Temperatur, einer Schwingung, eines Geräuschs, einer Schmierung und/oder eines Versatzes sowie eine Platine und eine Stromversorgung in einem ringförmigen Basiskörper aufgenommen sind.

Aus US 2003/030565 A1 und US 2018/224306 A1 sind ringförmige Sensoreinheiten mit einer externen Stromversorgung bekannt, die mehrere Sensoren aufweisen.

Ausgehend von diesem Stand der Technik ist es eine Aufgabe der vorliegenden Erfindung, eine Sensoreinheit mit alternativem Aufbau zu schaffen.

Zur Lösung dieser Aufgabe schafft die vorliegende Erfindung eine Sensoreinheit, die dadurch gekennzeichnet ist, dass sie einen die Sensorbestandteile sowie die zumindest eine Platine aufnehmenden ringförmigen Basiskörper aufweist. Dank der Tatsache, dass Sensorbestandteile verschiedener Sensoreinrichtungen sowie die zumindest eine Platine, welche die Spannungsversorgungs- und Signalübertragungskomponenten für diese Sensorbestandteile aufweist, an einem einzelnen ringförmigen Basiskörper vormontiert und untereinander geeignet verdrahtet sind, lässt sich die erfindungsgemäße Sensoreinheit schnell und einfach in einem mechanischen System montieren, da lediglich der Basiskörper eingebaut werden muss. Entsprechend geht die Montage der erfindungsgemäßen Sensoreinheit mit geringem Zeit- und Kostenaufwand einher.

Die verschiedenen Sensoreinrichtungen weisen erfindungsgemäß zumindest eine Drehmomentsensoreinrichtung auf, wobei als Sensorbestandteil der Drehmomentsensoreinrichtung ein ringförmig ausgebildeter Signalempfänger am Innenumfang des Basiskörpers positioniert ist. Der ringförmig ausgebildete Signalempfänger ist beispielsweise in Form eines Messingbandes oder dergleichen ausgebildet. Der zugehörige Messgrößenaufnehmer sowie der zugehörige Signalsender der Drehmomentsensoreinrichtung werden dann im Falle eines Getriebes an eine Getriebewelle radial einwärts des Basiskörpers positioniert.

Gemäß einer Ausgestaltung der vorliegenden Erfindung weisen die verschiedenen Sensoreinrichtungen zumindest eine Temperatursensoreinrichtung und/oder zumindest eine Vibrationssensoreinrichtung auf. Damit können mit einer einzelnen Sensoreinheit sämtliche Daten aufgenommen werden, die insbesondere für die Überwachung eines Getriebes erforderlich sind.

Bevorzugt ist an dem Basiskörper eine einzelne von außen zugängliche Schnittstelle zum Anschließen externer Spannungsversorgungs- und Signalübertragungsleitungen vorgesehen. Auf diese Weise wird die Handhabung einer erfindungsgemäßen Sensoreinheit bezüglich des Anschließens der Sensoreinheit an eine externe Spannungsversorgungs- und Signalauswerteeinrichtung deutlich verbessert.

Vorteilhaft sind als Sensorbestandteile ein Messgrößenaufnehmer zumindest einer Temperatursensoreinrichtung und ein Messgrößenaufnehmer zumindest einer Vibrationssensoreinrichtung an einer ersten Stirnseite des Basiskörpers positioniert, und die Spannungsversorgungs- und Signalübertragungsschnittstelle ist an einer gegenüberliegenden zweiten Stirnseite des Basiskörpers positioniert. Entsprechend können die Messgrößenaufnehmer der Temperatursensor- und der Vibrationssensoreinrichtung bei der Montage des Basiskörpers zu einem zu überwachenden Bauteil ausgerichtet werden, bei dem es sich z.B. um ein Getriebelager handelt, während ein Anschließen externer Spannungsversorgungs- und Signalübertragungsleitungen von der anderen Stirnseite des Basiskörpers erfolgt.

Gemäß einer Ausgestaltung der vorliegenden Erfindung ist die Platine im Innern des Basiskörpers positioniert. Ein Vorteil einer solchen Anordnung der Platine besteht darin, dass die Platine vor äußeren Einflüssen geschützt ist. Analoges gilt auch für die zwischen den Sensorbestandteilen und der Platine vorhandenen Verdrahtungen.

Der Basiskörper ist vorteilhaft aus einem ölbeständigen, temperatur- und druckfesten Material hergestellt, insbesondere aus einem Kunststoff, bevorzugt aus Polyamid. Entsprechend kann der Basiskörper den in einem Getriebe bzw. in einem mechanischen System vorherrschenden Bedingungen ohne weiteres standhalten. Das Maß der Ölbeständigkeit sowie der Temperatur- und Druckfestigkeit des Materials ist jeweils anhand der Betriebsbedingungen des mechanischen Systems festzulegen, in welches die Sensoreinheit integriert wird.

Gemäß einer Ausgestaltung der vorliegenden Erfindung ist der Basiskörper additiv gefertigt, was eine hohe Flexibilität bei der Produktion des Basiskörpers und damit auch der Sensoreinheit nach sich zieht. Alternativ ist es grundsätzlich natürlich auch möglich, den Basiskörper unter Einsatz anderer Fertigungstechnologien zu produzieren.

Ferner schafft die vorliegende Erfindung Getriebe mit zumindest einer erfindungsgemäßen Sensoreinheit.

Der Basiskörper der Sensoreinheit ist bevorzugt zwischen einem auf einer Getriebewelle angeordneten Getriebelager und einem Getriebegehäusedeckel angeordnet und kann an diesen Getriebekomponenten anliegen, insbesondere wenn diese Getriebekomponenten fokussiert betrachtet werden sollen.

An der Getriebewelle sind bevorzugt radial einwärts des Basiskörpers als Sensorbestandteile einer Drehmomentsensoreinrichtung ein Messgrößenaufnehmer und ein Signalsender vorgesehen, der die vom Messgrößenaufnehmer erfassten Messdaten an einen am Innenumfang des Basiskörpers vorgesehenen Signalempfänger übermittelt.

Ferner schafft die Erfindung einen Antriebsstrang, umfassend eine Rotorwelle, die drehmomentübertragend mit einem Getriebe verbunden ist, das wiederum drehmomentübertragend mit einem Generator verbunden ist, dadurch gekennzeichnet, dass das Getriebe als erfindungsgemäßes Getriebe ausgebildet ist.

Zudem schafft die vorliegende Erfindung eine Windkraftanlage, umfassend einen Rotor, der an einer Gondel angebracht ist, wobei in der Gondel ein Antriebsstrang angeordnet ist, der drehmomentübertragend mit dem Rotor verbunden ist, wobei der Antriebsstrang als erfindungsgemäßer Antriebsstrang ausgebildet ist.

Darüber hinaus schafft die vorliegende Erfindung eine Industrie-Applikation, umfassend ein Antriebsmittel, das mit einem Getriebe drehmomentübertragend verbunden ist, das mit einer mechanischen Anwendung drehmomentübertragend gekoppelt ist, wobei das Getriebe als erfindungsgemäßes Getriebe ausgebildet ist.

Weitere Merkmale und Vorteile der vorliegenden Erfindung werden anhand der nachfolgenden Beschreibung unter Bezugnahme auf die beiliegende Zeichnung deutlich. Darin ist
- FIG 1: eine perspektivische Vorderansicht einer Sensoreinheit gemäß einer Ausführungsform der vorliegenden Erfindung;
- FIG 2: eine perspektivische Rückansicht der in FIG 1 gezeigten Sensoreinheit;
- FIG 3: eine Teilschnittansicht eines Getriebes mit einer in den Figuren 1 und 2 dargestellten Sensoreinheit;
- FIG 4: eine geschnittene Seitenansicht einer Ausführungsform einer erfindungsgemäßen Windkraftanlage;
- FIG 5: eine schematische Darstellung einer Ausführungsform eines erfindungsgemäßen Antriebsstrangs und
- FIG 6: eine schematische Darstellung einer Ausführungsform einer erfindungsgemäßen Industrie-Applikation.

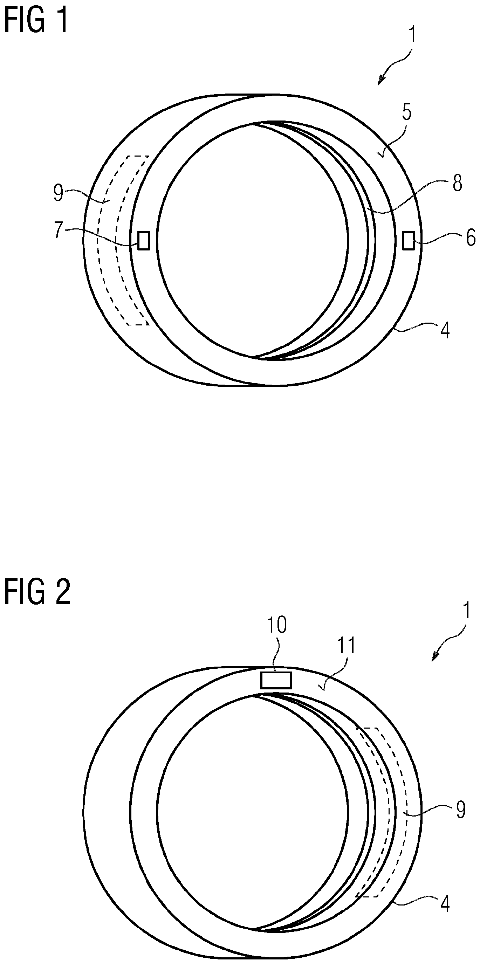

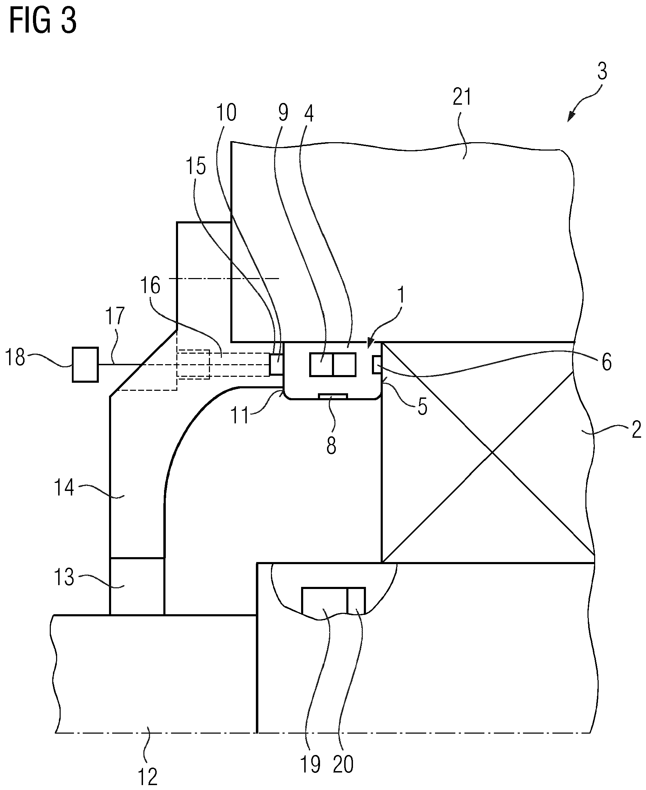

Die in den Figuren 1 und 2 dargestellte Sensoreinheit 1 dient zur Überwachung eines Getriebes 3 oder seiner Komponenten, vorliegend zur Überwachung eines Getriebelagers 2, wie es nachfolgend unter Bezugnahme auf FIG 3 noch näher erläutert wird. Die Sensoreinheit 1 umfasst einen ringförmigen Basiskörper 4, der bevorzugt additiv aus einem ölbeständigen sowie temperatur- und druckfesten Material hergestellt ist, beispielsweise aus Polyamid. An einer ersten Stirnseite 5 des Basiskörpers 4 sind ein Messgrößenaufnehmer 6 einer Temperatursensoreinrichtung und ein Messgrößenaufnehmer 7 einer Vibrationssensoreinrichtung positioniert bzw. in die Stirnseite 5 eingelassen. Bei dem Messgrößenaufnehmer 6 der Temperatursensoreinrichtung kann es sich beispielsweise um ein Thermoelement handeln. Als Messgrößenaufnehmer 7 der Vibrationssensoreinrichtung kann zum Beispiel ein MEMS-Sensor (Micro-Electro-Mechanical-System) eingesetzt werden. Am Innenumfang des Basiskörpers 4 ist als Sensorbestandteil einer Drehmomentsensoreinrichtung ein Signalempfänger 8 positioniert, vorliegend in Form eines ringförmig ausgebildeten Signalempfängers aus einem Messingband. Die Messgrößenaufnehmer 6 und 7 sowie der Signalempfänger 8 sind an eine Platine 9 angeschlossen, die vorliegend im Inneren des Basiskörpers 4 positioniert ist und die erforderlichen Spannungsversorgungs- und Signalübertragungskomponenten für die besagten Sensorbestandteile aufweist. Ferner verfügt die Sensoreinheit 1 über eine einzelne von außen zugängliche Schnittstelle 10, die mit der Platine 9 verdrahtet ist und zum Anschließen externer Spannungsversorgungs- und Signalübertragungsleitungen dient. Die Schnittstelle 10 ist vorliegend an der der Stirnseite 5 gegenüberliegenden Stirnseite 11 des Basiskörpers 4 positioniert.

FIG 3 zeigt beispielhaft einen Bereich eines Getriebes 3 mit einem Getriebegehäuse 21, in dem eine Getriebewelle 12 unter Verwendung von Getriebelagern 2 drehbar gehalten ist, wobei in FIG 3 nur eines der Getriebelager 2 dargestellt ist. Zwischen einem über eine Dichtung 13 gegenüber der Getriebewelle 12 abgedichteten Getriebegehäusedeckel 14 und dem Getriebelager 2 ist die in den Figuren 1 und 2 dargestellte Sensoreinheit 1 derart montiert, dass der Basiskörper 4 stirnseitig fest an beiden Bauteilen anliegt und die Messgrößenaufnehmer 6 und 7 der Temperatur- und Vibrationssensoreinrichtungen zu dem zu überwachenden Getriebelager 2 weisen. Im Bereich der Schnittstelle 10 ist der Getriebegehäusedeckel mit einer Aussparung 15 und einer axial mit der Schnittstelle 10 fluchtenden Durchgangsbohrung 16 versehen, um Platz zum Anschließen und Hindurchführen von in FIG 3 gestrichelt dargestellten Spannungsversorgungs- und Signalübertragungsleitungen 17 zu schaffen, über welche die Sensoreinheit 1 mit einer Spannungsversorgungs- und Signalauswerteeinrichtung 18 verbunden ist. An der Getriebewelle 12 sind radial einwärts des Basiskörpers 4 als weitere Sensorbestandteile der Drehmomentsensoreinrichtung ein Messgrößenaufnehmer 19 und ein Signalsender 20 vorgesehen, die vorliegend in die Getriebewelle 12 eingelassen sind.

Ein wesentlicher Vorteil besteht darin, dass sich die Messgrößenaufnehmer 6, 7 und der Signalempfänger 8 beispielhaft für Sensorkomponenten verschiedener Sensoreinrichtungen mit geringem Zeit- und Kostenaufwand in einem mechanischen System montieren lassen, da diese an einem einzelnen Basiskörper 4 angeordnet sind. Ein weiterer Vorteil besteht darin, dass sich die Sensoreinheit 1 Dank ihrer einzelnen Schnittstelle 10 auch schnell einfach an die externe Spannungsversorgungs- und Signalauswerteeinrichtung 18 anschließen lässt.

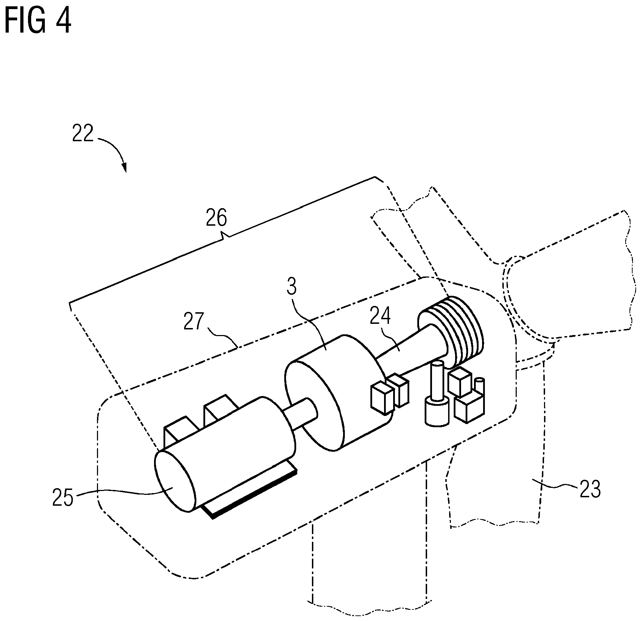

In FIG 4 ist in einer geschnittenen Schrägansicht eine Ausführungsform einer erfindungsgemäßen Windkraftanlage 22 dargestellt. Die Windkraftanlage 22 umfasst eine Rotor 23, der durch Wind in Drehung versetzbar ist. Der Rotor 23 ist über eine Rotorwelle 24 mit einem als Planetengetriebe ausgeführten erfindungsgemäßen Getriebe 3 drehmomentübertragend verbunden. Das Getriebe 3 wiederum ist drehmomentübertragend mit einem Generator 25 verbunden. Die Rotorwelle 24, das Getriebe 3 und der Generator 25 gehören zu einem Antriebsstrang 26, der in einer Gondel 27 der Windkraftanlage 22 aufgenommen ist. Der Generator 25 weist zwei, drei oder vier Polpaare auf.

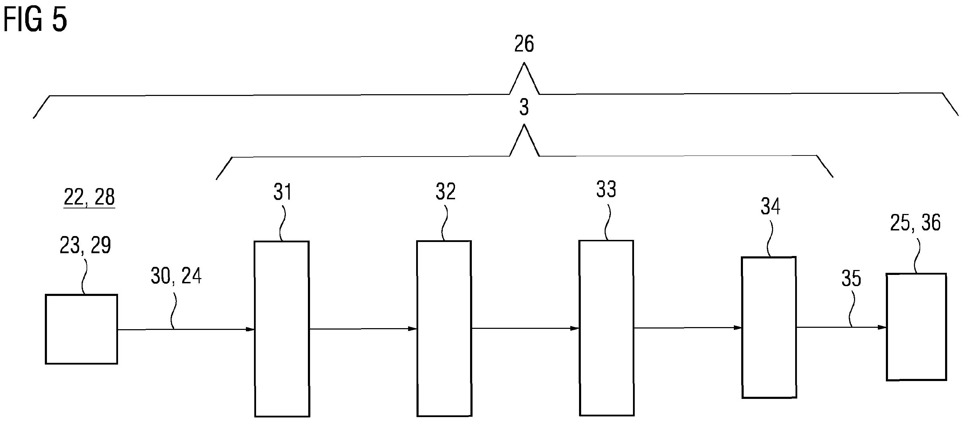

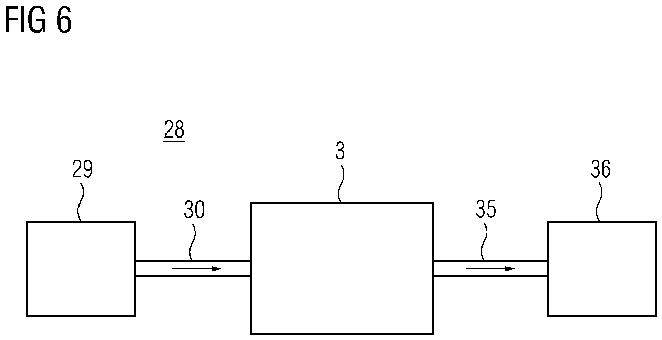

FIG 5 zeigt einen schematischen Aufbau einer weiteren Ausführungsform des erfindungsgemäßen Antriebsstrangs 26, der in einer nicht näher dargestellten Windkraftanlage 22 oder einer nicht näher dargestellten Industrie-Applikation 28 einsetzbar ist. Der Antriebsstrang 26 umfasst ein erfindungsgemäßes Getriebe 3, das als Planetengetriebe ausgeführt ist, das eingangsseitig mit einem Antriebsmittel 29 oder einem Rotor 23 der Windkraftanlage 22 verbunden ist und dem so eine Antriebsleistung 30 zugeführt wird. In einer Windkraftanlage 22 erfolgt dies mittels einer Rotorwelle 24. Das Getriebe 3 umfasst vorliegend Planetenstufen 31, 32 und 33 sowie eine Stirnradstufe 34, die hintereinander angeordnet sind. Die Getriebestufen 31, 32, 33 und 34 geben eine Abtriebsleistung 35 an einen Generator 25 oder eine mechanische Anwendung 36 ab. In FIG 6 ist schematisch der Aufbau einer Ausführungsform einer Industrie-Applikation 28 dargestellt, die über ein Antriebsmittel 29 verfügt. Das Antriebsmittel 29 ist dazu ausgebildet, eine Antriebsleistung 30 bereitzustellen, die durch eine drehmomentübertragende Verbindung an ein erfindungsgemäßes Getriebe 3 transportiert wird. Das Getriebe 3 ist wiederum drehmomentübertragend mit einer mechanischen Anwendung 36 verbunden, um eine Abtriebsleistung 35 zur mechanischen Anwendung 36 zu transportieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die angefügten Ansprüche definiert wird.

## Patentansprüche

1. Sensoreinheit (1) umfassend Sensorbestandteile verschiedener Sensoreinrichtungen sowie zumindest eine Platine (9), die Spannungsversorgungs- und Signalübertragungskomponenten für die Sensorbestandteile aufweist, wobei an die Platine die Sensorbestandteile angeschlossen sind, wobei die Sensoreinheit (1) einen die Sensorbestandteile sowie die zumindest eine Platine (9) aufnehmenden ringförmigen Basiskörper (4) aufweist, **dadurch gekennzeichnet, dass**
die verschiedenen Sensoreinrichtungen zumindest eine Drehmomentsensoreinrichtung aufweisen, wobei als Sensorbestandteil der Drehmomentsensoreinrichtung ein ringförmig ausgebildeter Signalempfänger (8) am Innenumfang des Basiskörpers (4) positioniert ist.

2. Sensoreinheit (1) nach Anspruch 1, **dadurch gekennzeichnet, dass** die verschiedenen Sensoreinrichtungen zumindest eine Temperatursensoreinrichtung und/oder zumindest eine Vibrationssensoreinrichtung aufweisen.

3. Sensoreinheit (1) nach Anspruch 1 oder 2, **dadurch gekennzeichnet, dass** an dem Basiskörper (4) eine einzelne von außen zugängliche Schnittstelle (10) zum Anschließen externer Spannungsversorgungs- und Signalübertragungsleitungen (17) vorhanden ist.

4. Sensoreinheit (1) nach Anspruch 3, **dadurch gekennzeichnet, dass** als Sensorbestandteile ein Messgrößenaufnehmer (6) zumindest einer Temperatursensoreinrichtung und ein Messgrößenaufnehmer (7) zumindest einer Vibrationssensoreinrichtung an einer ersten Stirnseite (5) des Basiskörpers (4) positioniert sind, und dass die Spannungsversorgungs- und Signalübertragungsschnittstelle (10) an einer gegenüberliegenden zweiten Stirnseite (11) des Basiskörpers (4) positioniert ist.

5. Sensoreinheit (1) nach Anspruch 4, **dadurch gekennzeichnet, dass** die Platine (9) ringsegmentförmig ausgebildet ist.

6. Sensoreinheit (1) nach einem der Ansprüche 1 bis 5, **dadurch gekennzeichnet, dass** der ringförmig ausgebildete Signalempfänger (8) ein Messingband ist.

7. Sensoreinheit (1) nach einem der vorhergehenden Ansprüche, **dadurch gekennzeichnet, dass** die Platine (9) im Innern des Basiskörpers (4) positioniert ist.

8. Sensoreinheit (1) nach einem der vorhergehenden Ansprüche, **dadurch gekennzeichnet, dass** der Basiskörper (4) aus einem ölbeständigen, temperatur- und druckfesten Material hergestellt ist, insbesondere aus einem Kunststoff, bevorzugt aus Polyamid.

9. Sensoreinheit (1) nach einem der vorhergehenden Ansprüche, **dadurch gekennzeichnet, dass** der Basiskörper (4) additiv gefertigt ist.

10. Getriebe (3) mit zumindest einer Sensoreinheit (1) nach einem der vorhergehenden Ansprüche.

11. Getriebe (3) nach Anspruch 10, **dadurch gekennzeichnet, dass** der Basiskörper (4) der Sensoreinheit (1) zwischen einem auf einer Getriebewelle (12) angeordneten Getriebelager (2) und einem Getriebegehäusedeckel (14) angeordnet ist und insbesondere an diesen Getriebekomponenten anliegt.

12. Getriebe (3) nach Anspruch 11, **dadurch gekennzeichnet, dass** an der Getriebewelle (12) radial einwärts des Basiskörpers (4) als Sensorbestandteile einer Drehmomentsensoreinrichtung ein Messgrößenaufnehmer (19) und ein Signalsender (20) vorgesehen sind.

13. Antriebsstrang (26), umfassend eine Rotorwelle (24), ein Getriebe (3) nach einem der Ansprüche 10 bis 12 und einen Generator (25), wobei die Rotorwelle (24) drehmomentübertragend mit dem Getriebe (3) verbunden ist, das wiederum drehmomentübertragend mit einem Generator (25) verbunden ist.

14. Windkraftanlage (22), umfassend einen Rotor (23), eine Gondel (27) und einen Antriebsstrang nach Anspruch 13, wobei der Rotor (23) an der Gondel (27) angebracht ist, wobei in der Gondel (27) der Antriebsstrang (26) angeordnet ist, der drehmomentübertragend mit dem Rotor (23) verbunden ist.

15. Industrie-Applikation (28), umfassend ein Antriebsmittel (29), ein Getriebe (3) nach einem der Ansprüche 10 bis 12 und eine mechanische Anwendung (36), wobei das Antriebsmittel (29) mit dem Getriebe (3) drehmomentübertragend verbunden ist, das mit der mechanischen Anwendung (36) drehmomentübertragend gekoppelt ist.

## Claims

1. Sensor unit (1), comprising sensor constituent parts of various sensor devices and also at least one printed circuit board (9) which has voltage supply and signal transmission components for the sensor constituent parts, wherein the sensor constituent parts are connected to the printed circuit board, wherein the sensor unit (1) has an annular base body (4) which receives the sensor constituent parts and also the at least one printed circuit board (9),
**characterized in that**
the various sensor devices have at least one torque sensor device, wherein, as a sensor constituent part of the torque sensor device, an annular signal receiver (8) is positioned on the inner periphery of the base body (4) .

2. Sensor unit (1) according to Claim 1, **characterized in that** the various sensor devices have at least one temperature sensor device and/or at least one vibration sensor device.

3. Sensor unit (1) according to Claim 1 or 2, **characterized in that** there is an individual interface (10), which is accessible from the outside, on the base body (4) for connecting external voltage supply and signal transmission lines (17).

4. Sensor unit (1) according to Claim 3, **characterized in that**, as sensor constituent parts, a measurement variable pickup (6) of at least one temperature sensor device and a measurement variable pickup (7) of at least one vibration device are positioned on a first end side (5) of the base body (4), and **in that** the voltage supply and signal transmission interface (10) is positioned on an opposite second end side (11) of the base body (4).

5. Sensor unit (1) according to Claim 4, **characterized in that** the printed circuit board (9) is in the form of a segment of a ring.

6. Sensor unit (1) according to one of Claims 1 to 5, **characterized in that** the annular signal receiver (8) is a brass strip.

7. Sensor unit (1) according to one of the preceding claims, **characterized in that** the printed circuit board (9) is positioned in the interior of the base body (4).

8. Sensor unit (1) according to one of the preceding claims, **characterized in that** the base body (4) is produced from an oil-resistant, temperature-resistant and pressure-resistant material, in particular from a plastic, preferably from polyamide.

9. Sensor unit (1) according to one of the preceding claims, **characterized in that** the base body (4) is manufactured in an additive manner.

10. Gear (3) having at least one sensor unit (1) according to one of the preceding claims.

11. Gear (3) according to Claim 10, **characterized in that** the base body (4) of the sensor unit (1) is arranged between a gear mount (2), which is arranged on a gear shaft (12), and a gear housing cover (14), and in particular bears against these gear components.

12. Gear (3) according to Claim 11, **characterized in that** a measurement variable pickup (19) and a signal transmitter (20) are provided on the gear shaft (12) radially inwards of the base body (4) as sensor constituent parts of a torque sensor device.

13. Drive train (26) comprising a rotor shaft (24), a gear (3) according to one of Claims 10 to 12 and a generator (25), wherein the rotor shaft (24) is connected in a torque-transmitting manner to the gear (3) which, in turn, is connected in a torque-transmitting manner to a generator (25).

14. Wind power installation (22), comprising a rotor (23), a nacelle (27) and a drive train according to Claim 13, wherein the rotor (23) is attached to the nacelle (27), wherein the drive train (26) is arranged in the nacelle (27) and is connected in a torque-transmitting manner to the rotor (23).

15. Industrial application (28), comprising a drive means (29), a gear (3) according to one of Claims 10 to 12 and a mechanical application (36), wherein the drive means (29) is connected in a torque-transmitting manner to the gear mechanism (3) which is coupled in a torque-transmitting manner to the mechanical application (36).

## Revendications

1. Unité de capteur (1) comprenant des éléments constitutifs de capteur de différents dispositifs capteurs ainsi qu'au moins une platine (9), qui possède des composants d'alimentation électrique et de transmission de signal pour les éléments constitutifs de capteur, les éléments constitutifs de capteur étant raccordés à la platine, l'unité de capteur (1) possédant un corps de base (4) de forme annulaire qui accueille les éléments constitutifs de capteur ainsi que l'au moins une platine (9),
**caractérisée en ce que**
les différents dispositifs capteurs possèdent au moins un dispositif capteur de couple, un récepteur de signal (8) de configuration annulaire, en tant qu'élément constitutif de capteur du dispositif capteur de couple, étant positionné sur le pourtour intérieur du corps de base (4).

2. Unité de capteur (1) selon la revendication 1, **caractérisée en ce que** les différents dispositifs capteurs possèdent au moins un dispositif capteur de température et/ou au moins un dispositif capteur de vibrations.

3. Unité de capteur (1) selon la revendication 1 ou 2, **caractérisée en ce qu'**une interface (10) individuelle, accessible depuis l'extérieur et destinée au raccordement de lignes d'alimentation électrique et de transmission de signal (17) externes, est présente sur le corps de base (4).

4. Unité de capteur (1) selon la revendication 3, **caractérisée en ce qu'**un enregistreur de grandeur de mesure (6) d'au moins un dispositif capteur de température et un enregistreur de grandeur de mesure (7) d'au moins un dispositif capteur de vibrations sont positionnés en tant qu'éléments constitutifs de capteur au niveau d'un premier côté frontal (5) du corps de base (4), et **en ce que** l'interface d'alimentation électrique et de transmission de signal (10) est positionnée au niveau d'un deuxième côté frontal (11) opposé du corps de base (4).

5. Unité de capteur (1) selon la revendication 4, **caractérisée en ce que** la platine (9) est configurée en forme de segment d'anneau.

6. Unité de capteur (1) selon l'une des revendications 1 à 5, **caractérisée en ce que** le récepteur de signal (8) de configuration annulaire est une bande en laiton.

7. Unité de capteur (1) selon l'une des revendications précédentes, **caractérisée en ce que** la platine (9) est positionnée à l'intérieur du corps de base (4).

8. Unité de capteur (1) selon l'une des revendications précédentes, **caractérisée en ce que** le corps de base (4) est fabriqué à partir d'un matériau résistant à l'huile, à l'épreuve de la température et de la pression, notamment en une matière plastique, de préférence en polyamide.

9. Unité de capteur (1) selon l'une des revendications précédentes, **caractérisée en ce que** le corps de base (4) est fabriqué de manière additive.

10. Engrenage (3) comprenant au moins une unité de capteur (1) selon l'une des revendications précédentes.

11. Engrenage (3) selon la revendication 10, **caractérisé en ce que** le corps de base (4) de l'unité de capteur (1) est disposé entre un palier d'engrenage (2) disposé sur un arbre d'engrenage (12) et un couvercle de carter d'engrenage (14) et repose notamment sur ces composants d'engrenage.

12. Engrenage (3) selon la revendication 11, **caractérisé en ce qu'**un enregistreur de grandeur de mesure (19) et un émetteur de signaux (20) se trouvent sur l'arbre d'engrenage (12) radialement vers l'intérieur du corps de base (4) en tant qu'éléments constitutifs de capteur d'un dispositif capteur de couple.

13. Chaîne cinématique (26), comprenant un arbre de rotor (24), un engrenage (3) selon l'une des revendications 10 à 12 et un générateur (25), l'arbre de rotor (24) étant relié en transmission de couple avec l'engrenage (3), lequel est à son tour relié en transmission de couple avec un générateur (25).

14. Aérogénérateur (22), comprenant un rotor (23), une nacelle (27) et une chaîne cinématique selon la revendication 13, le rotor (23) étant monté sur la nacelle (27), la chaîne cinématique (26) étant disposée dans la nacelle (27) et reliée en transmission de couple avec le rotor (23).

15. Application industrielle (28), comprenant un moyen d'entraînement (29), un engrenage (3) selon l'une des revendications 10 à 12 et une application mécanique (36), le moyen d'entraînement (29) étant relié en transmission de couple avec l'engrenage (3), lequel est relié en transmission de couple avec l'application mécanique (36).
